# EUROPEAN PATENT SPECIFICATION

(11) **EP 4 438 494 B1**
(45) Date of publication and mention of the grant of the patent: **01.04.2026**
(21) Application number: 24157673.5
(22) Date of filing: 14.02.2024
(51) Int. Cl.: B64D 37/14, B64D 37/20, B64F 1/28, F16L 37/56

(54) **AIRCRAFT CONNECTOR FOR FLUID TRANSFER**
FLUGZEUGVERBINDER FÜR DEN FLUIDTRANSFER
RACCORD D'AÉRONEF POUR TRANSFERT DE FLUIDE

(30) Priority: 31.03.2023 GB 202304778
(43) Date of publication of application: 02.10.2024
(73) Proprietor: Airbus Operations Limited, Bristol BS34 7PA (GB)
(72) Inventor: EDWARDS, Henry, Bristol, BS34 7PA (GB)
(74) Representative: Ribeiro, James Michael

(56) References cited:
- EP-A1- 4 253 252
- WO-A1-2010/004321
- US-A- 2 628 850
- US-A1- 2012 024 418
- US-A1- 2021 039 803
- US-B2- 9 366 370

## Description

### FIELD OF THE INVENTION

The present invention relates to an aircraft, a kit of parts, and a method of transferring fluids to and/or from an aircraft.

### BACKGROUND OF THE INVENTION

Jet fuels are the most common aircraft fuels. There are recent advances that supplement these conventional jet fuels with similar biofuels, such as sustainable aviation fuel (SAF). There are also ambitions to use other fuels such as ammonia and hydrogen, with combinations of these fuels expected to have respective advantages in different flight phases. Historical examples of dual-fuel aircraft have included the B57 Canberra as part of NACA's project Bee, in which kerosene-based fuel and hydrogen fuel were used alternately during flight.

In many cases, the employment of dual-fuel aircraft will require substantial changes to existing designs and procedures to account for fuels that may not be compatible in terms of storage or combustion.

WO2010/004321A1 discloses a connector for connecting a pipe, such as a fuel pipe, to another fuel pipe or pipe terminal. US 2012/024418 A1 discloses a refuel valve assembly and method for refuelling an aircraft, wherein the refuel valve assembly comprises an inlet for receiving fuel from an orifice in a structure of the aircraft, a first and a second outlet for delivering fuel from behind the structure to the first and second fuel tanks.

### SUMMARY OF THE INVENTION

A first aspect of the invention provides an aircraft according to claim 1.

With this arrangement, multiple fluids can be transferred to and/or from the aircraft with only a single connector pair. This reduces the number of couplings needed for, e.g., refuelling a multi-fuel aircraft.

Optionally, the cross-section of the first fluid path is different to the cross-section of the second fluid path.

Optionally, the first fluid path is concentric with the second fluid path.

The first fluid path is defined by a first conduit of the first connector.

The second fluid path is defined by a second conduit of the first connector.

Optionally, the first conduit extends through an outer wall of the second conduit.

Optionally, the first connector comprises an alignment pin or an alignment port for mating with a corresponding alignment port or alignment pin of a second connector so as to align the connectors.

Optionally, the first fluid path extends to a first aircraft fluid tank and the second fluid path extends to a second aircraft fluid tank.

Optionally, the first and/or second aircraft fluid tank is an aircraft fuel tank.

Optionally, the first fluid path and the second fluid path extend to a common fluid tank.

Optionally, the first connector includes a third fluid path extending to an aircraft fluid tank. The third fluid path may extend to a third fuel tank, or the third fluid path may extend to the same fuel tank as one of the first and second fluid paths.

A further aspect of the invention provides a kit of parts comprising the aircraft of any preceding claim and a second, complementary connector configured to releasably connect to the first connector to form a connection, the second connector including a first fluid path that upon connection to the first connector extends from the first fluid path of the first connector towards an external fluid tank, and a second fluid path that upon connection to the first connector extends from the second fluid path of the first connector towards an external fluid tank. The first and second fluid paths may extend to a common fluid tank or separate fluid tanks.

Optionally, the first connector and the second connector are configured such that: the first fluid path of the first connector is unable to form a fluidically sealed path with the second fluid path of the second connector, and the second fluid path of the first connector is unable to form a fluidically sealed path with the first fluid path of the second connector.

This arrangement ensures the connection is always formed correctly, with no risk of cross-flow between the respective fluid paths.

Optionally, the second connector is a male connector and the first connector is a female connector configured to receive the second connector.

Optionally, the connection includes a locking mechanism configured to releasably fix the second connector relative to the first connector.

A further aspect of the invention provides a method of transferring fluids to and/or from an aircraft, in accordance with claim 9. The first fluid may be different to the second fluid.

In use, first fluid path is defined by a first conduit connected to a first conduit of the second connector, and the second fluid path is defined by a second conduit of the first connector connected to a second conduit of the second connector.

The method optionally comprises transferring the first fluid through the first fluid path to or from a first aircraft fuel tank, and transferring the second fluid through the second fluid path to or from a second aircraft fuel tank.

The method optionally comprises transferring the first fluid through the first fluid path to or from an aircraft fuel tank, and transferring the second fluid through the second fluid path to or from the aircraft fuel tank.

Optionally, wherein the first fluid is one of a first aviation fuel, a second aviation fuel, fuel additives, oxygen-depleted air, a tracer gas, hydraulic fluid, engine oil, or water, and wherein the second fluid is a different one of a first aviation fuel, a second aviation fuel, fuel additives, oxygen depleted air, a tracer gas, hydraulic fluid, engine oil, or water.

Optionally, wherein the first aviation fuel and second aviation fuels comprise one of a jet fuel, sustainable aviation fuel, ammonia, liquid hydrogen, and gaseous hydrogen.

Optionally, the method comprises: transferring water through the first fluid path towards an aircraft water tank, and transferring waste through the second fluid path from an aircraft waste tank.

### BRIEF DESCRIPTION OF THE DRAWINGS

Embodiments of the invention will now be described with reference to the accompanying drawings, in which:
Figure 1 shows an aircraft;
Figure 2 shows the refuelling on a fuel tank in a port side wing;
Figure 3 shows a first connector and second connector according to an example of the present invention;
Figure 4 shows a schematic diagram of a refuelling process through the connection of the first connector and second connector;
Figure 5 shows a second example of a first connector;
Figure 6A shows the first connector of Figure 5 defining two fluid paths;
Figure 6B shows the first connector of Figure 5 defining three fluid paths;
Figure 7A shows a third example of a first connector;
Figure 7B shows a fourth example of a first connector;
Figure 7C shows a fifth example of a first connector;
Figure 7D shows a sixth example of a first connector;
Figure 7E shows a seventh example of a first connector;
Figure 8 shows an eighth example of a first connector and a second connector;
Figure 9 shows the first connector attached to the second connector to form a connection;
Figure 10 shows an extruded feature holding the conduits of the first connector relative to each other;
Figure 11 shows a set of seals for sealing the connection;
Figure 12 shows the assembly of the first connector on an aircraft panel;
Figure 13 shows the second connector inserted into the first connector;
Figure 14A shows a further example of a concentrically arranged first connector;
Figures 14B & 14C shows a further example in which an outer conduit of the first connector is divided into multiple channels;
Figure 15 shows an example in which the first and second fuel paths of the first connector converge towards a common fuel tank;
Figure 16 shows an example in which water and waste are transferred through the connection.

### DETAILED DESCRIPTION OF EMBODIMENT(S)

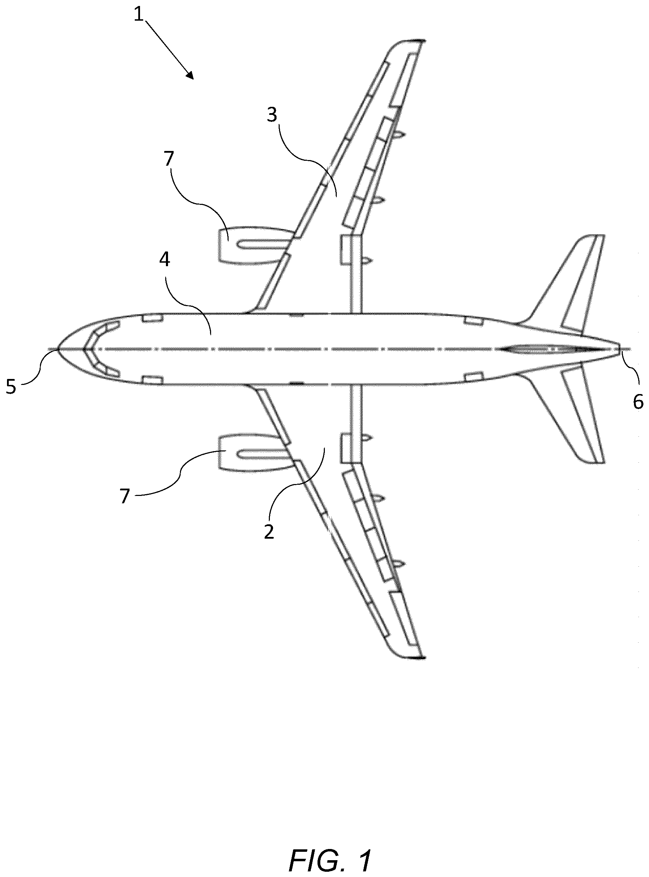

Figure 1 shows an aircraft 1 with port and starboard fixed wings 2, 3, engines 7, a fuselage 4 with a nose end 5 and a tail end 6. The aircraft 1 is a typical jet passenger transonic transport aircraft although the invention is applicable to a wide variety of aircraft types, including commercial, military, passenger, cargo, jet, propeller, general aviation, etc. with any number of engines attached or integral to the wings or fuselage.

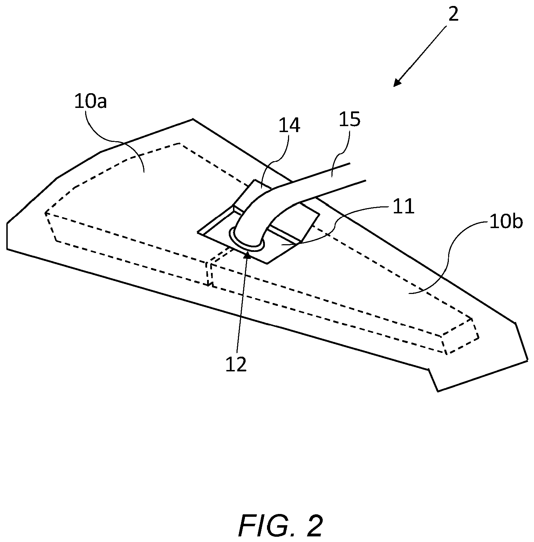

The aircraft 1 includes one or more fuel tanks 10a, 10b into which a quantity of fuel is transferred sufficient to complete the next flight, such as shown in Figure 2 where two fuel tanks 10a, 10b are shown inside the port wing 2. The fuel is supplied through a refuelling port 12. The refuelling port 12 is located on a refuelling panel 11. The refuelling panel 11 is a panel mounted to the aircraft structure that interfaces with the fuel tank(s) 10a, 10b, and may include various gauges and switches (not shown), as required, to monitor the refuelling process and the fuel tank 10.

The refuelling panel 11 and refuelling port 12 are located adjacent an access hatch 14 of the aircraft 1. The hatch 14 may form an outer aerodynamic surface of the aircraft 1, with the hatch 14 shown in an open position in Figure 2 so as to expose the refuelling port 12.

The refuelling port 12 is located adjacent a lower cover of the aircraft wing 2, however it will be appreciated that the refuelling port 12 (and access hatch 14 when applicable) may be located in any suitable location on the wings 2, 3, fuselage 4, or on a fairing (not shown).

In the closed position, the hatch 14 covers the refuelling port 12, such that the refuelling port 12 has a central axis that is substantially normal to the outer aerodynamic surface of the aircraft 1. The hatch 14 provides convenient external access to the refuelling port 12 so that fuel can be transferred to the fuel tank 10 via a refuel hose 15.

There is a desire to minimise the time required to refuel aircraft 1 due to refuelling being a significant contributor to the time required for aircraft 1 to remain grounded between flights. This desire is only expected to increase if aircraft move towards the use of multiple fuels.

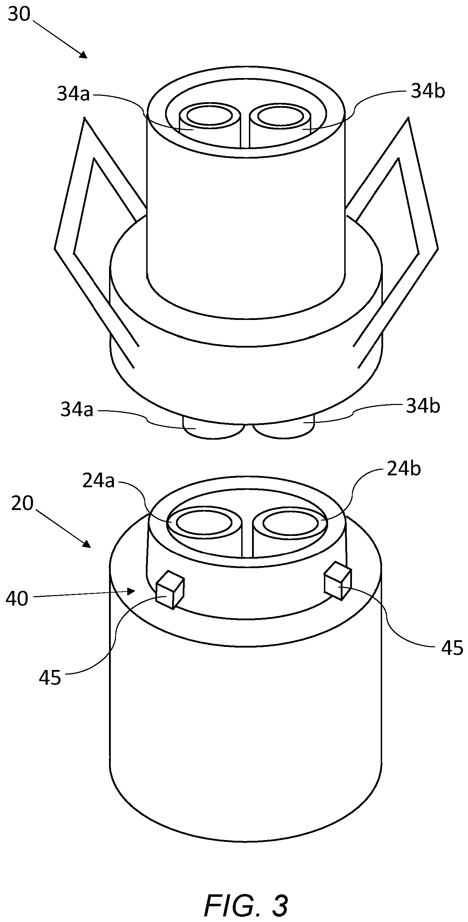

Figure 3 shows a first connector 20 that is arranged to mount over the refuelling port 12 and a second, complementary connector 30 that is arranged to releasably connect to the first connector 20 to form a connection. The connectors 20, 30 each comprise one half of a locking mechanism 40 configured to releasably fix the second connector 30 to the first connector 20. The connection is formed by a quick release mechanism. The example shown in Figure 3 is a rotation-based quick release mechanism in which tabs 45 on the first connector 20 are configured to engage with respective channels (not shown) on the second, complimentary connector 30, although it will be appreciated that other suitable quick release mechanisms are known such as pressure-based and clamping-based quick release mechanisms.

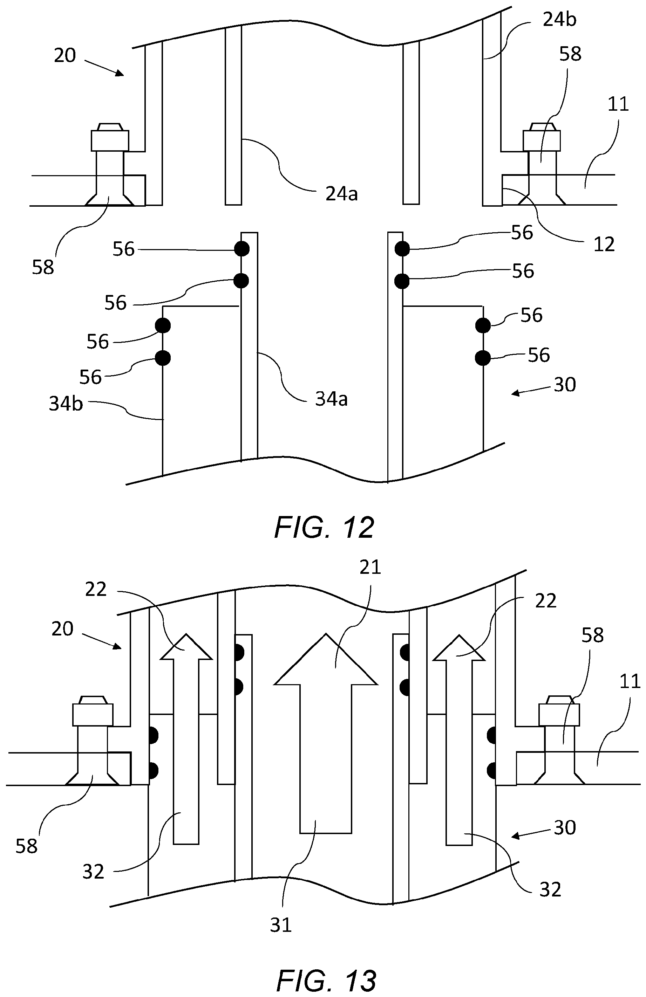

The first connector 20 is typically a female connection configured to receive a male second connector 30, such that the second connector 30 is inserted into an aperture of the first connector 20. In this case, the first fluid paths 21, 31 may have different diameters, and similarly the second fluid paths 22, 32 may have different diameters, such that there is a step change in the cross-section of the channels across the connection (such as shown in Figure 13).

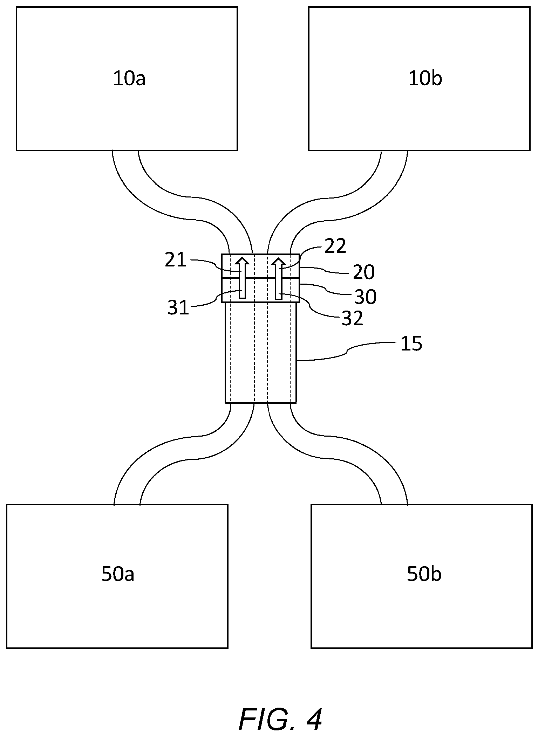

The first connector 20 and second connector 30 each define first and second fluid paths therethrough. **In** particular, the first connector 20 includes a first fluid path 21 extending towards a first fuel tank 10a and a second fluid path 22 extending towards a second fuel tank 10b, and the second connector 30 includes a first fluid path 31 extending towards a first external fuel tank 50a and a second fluid path 32 extending towards a second external fuel tank 50b. An example of this arrangement is shown schematically in Figure 4.

**In** this example, the first fluid paths 21, 31 are each defined by a respective first conduit 24a, 34a and the second fluid paths 22, 32 are each defined by a respective second conduit 24b, 34b (See Figure 3), although it will be appreciated that each fluid path 21, 22, 31, 32 may be defined by two or more conduits, as will be discussed in relation to subsequent examples.

**In** this manner, a single connection is formed that allows multiple aviation fuels to be transferred to the aircraft fuel tanks 10a, 10b from respective external fuel tanks 50a, 50b, with the external fuel tanks 50a, 50b (e.g. ground-based holding tanks) carrying the aviation fuel to be transferred to the aircraft 1. Refuelling a dual-fuel aircraft in this manner will provide considerable time savings over alternatives (such as using separate connections for each respective aviation fuel). **In** the example shown in Figure 4, the flow of the respective aviation fuels is shown by the arrows, with the aviation fuels transferred to the respective tanks 10a, 10b simultaneously, although separate refuelling would be possible.

It will be understood that any suitable aviation fuel may be transferred through the connection, with a non-exhaustive list comprising jet fuel, sustainable aviation fuel (SAF), ammonia, liquid hydrogen, and gaseous hydrogen. **In** some examples, different compositions of aviation fuels may be transferred separately through the connection, with one example being Jet A and Jet A-1 aviation fuels.

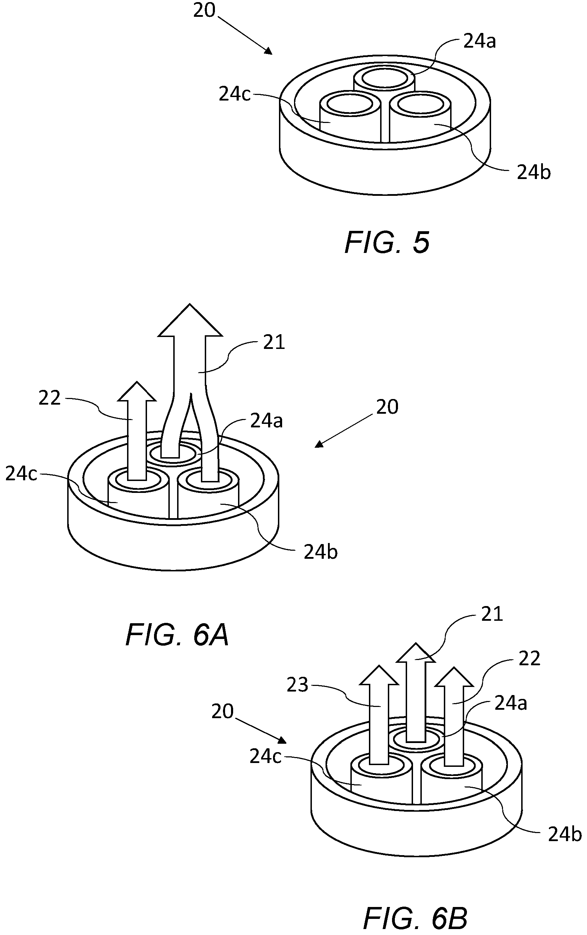

The first connector 20 and second connector 30 may be arranged in various configurations. Figure 5 shows an example in which the first connector 20 includes three conduits - a first, a second and a third conduit 24a, 24b, 24c. This may allow the first fluid path 21 to be defined by two conduits 24a, 24b to increase the total cross-sectional area of the first fluid path 21 extending to the first fuel tank 20a relative to the second fluid path 22 to the second fuel tank 20b (See Figure 6A). Alternatively, a third fluid path 23 may be defined by the third conduit 24c such that a single connection can allow three fuels to be transferred to respective fuel tanks (See Figure 6B).

The example described above requires careful alignment of the first connector 20 and second connector 30 to ensure that the first fluid path 21 of the first connector 20 aligns with the first fluid path 31 of the second connector 30, and similarly that the second fluid path 22 of the first connector 20 aligns with the second fluid path 32 of the second connector 30. In this way, the first fluid paths 21, 31 are fluidically sealed from the second fluid paths 22, 32.

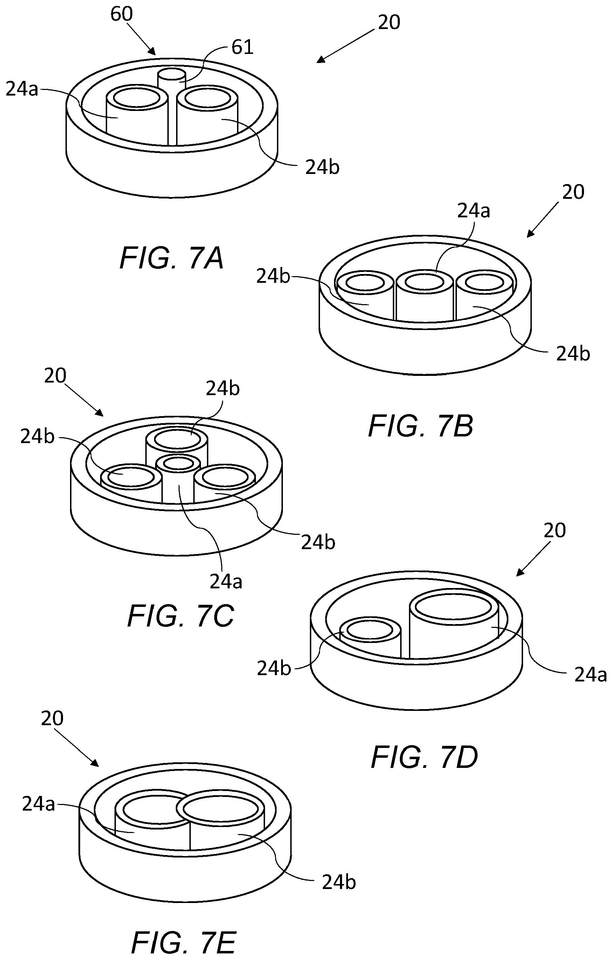

In a further example shown in Figure 7A, the first connector 20 and second connector 30 may each include one-half of an alignment feature 60 arranged to ensure the first connector 20 and second connector 30 are prevented from connecting incorrectly in such a manner that there is cross-over between the first and second fluid paths 21, 22, 31, 32 across the connection. The alignment feature 60 may include an alignment pin 61 and alignment port (not shown) that mate. In the example shown in Figure 7A, the first connector 20 includes an alignment pin 61 configured to mate with an alignment port of the second connector 30, although the second connector 30 may alternatively include the alignment pin 61 and the first connector 20 the alignment port.

In the example shown in Figure 7B, a first, inner conduit 24a defines the first fluid path 21, whilst a pair of second, outer conduits 24b define the second fluid path 22. Providing respective conduits 24a, 24b spaced at different distances from the central axis of the first connector 20 ensures that incorrect connection to the second connector 30 is not possible. Although it will be appreciated that alignment may still be difficult due to the connection only being possible in two orientations (in this case at 180 degrees relative to each other). Each of these conduits 24a, 24b would also require an individual seal to ensure respective fluidically sealed fluid paths, therefore requiring additional seals compared to an example having two conduits.

Figure 7C shows an example in which a first, inner conduit 24a defines the first fluid path 21, whilst three second, outer conduits 24b define the second fluid path 22. Three connectable orientations are thus provided (in this case at 120 degrees relative to each other), although the number of required seals is again increased.

Figure 7D shows an example in which the first conduit 24a extends further from the mouth of the first connector 20 than the second conduit 24b. The first conduit 24a may extend beyond the mouth of the first connector 20 and/or the second conduit 24b may be level with or recessed below the mouth of the first connector 20. This design requires only two conduits, whilst preventing the connection being fully formed without the correct alignment of the respective conduits 24a, 24b. Even so, it may still be possible to incorrectly align the first connector 20 and second connector 30 such that a single fluid path is formed, for instance the first conduit 24a of the first connector 20 may be connected to the second conduit (not shown) of the second connector 30, whilst a gap remains between the second conduit 24b of the first connector 20 and the first conduit (not shown) of the second connector 30.

It will be noted that the cross-sections of the first and second conduits 24a, 24b shown in Figure 7D are differently sized. The respective conduits 24a, 24b can be differently sized such that it is not possible to seal the first conduit 24a of the first connector 20 against the second conduit 34b of the second connector 30 (and similarly with the second conduit 24b of the first connector 20 and first conduit 34a of the second connector 30).

Figure 7E shows the profiles of the first and second conduits 24a, 24b merged. The different cross-sections of the first and second conduits 24a, 24b increase the utilisation of space within the first connector 20 and can prevent incorrect alignment, however challenges can be expected in providing an effective seal across the shared wall of the conduits 24a, 24b.

Each of the abovementioned examples requires the first connector 20 and second connector 30 to be fixed at a specified orientation. This requires the second connector 30 to be positioned precisely, increasing the time to correctly align the connectors 20, 30, and preventing relative rotation of the connectors 20, 30 once connected such that excessive rotational force may damage the connection.

The abovementioned examples of Figures 5-7E have been discussed in relation to a first connector 20, however it will be appreciated that the second connector 30 is similarly arranged so as to effectively form the connection across which the fluid paths 21, 22, 23 extend.

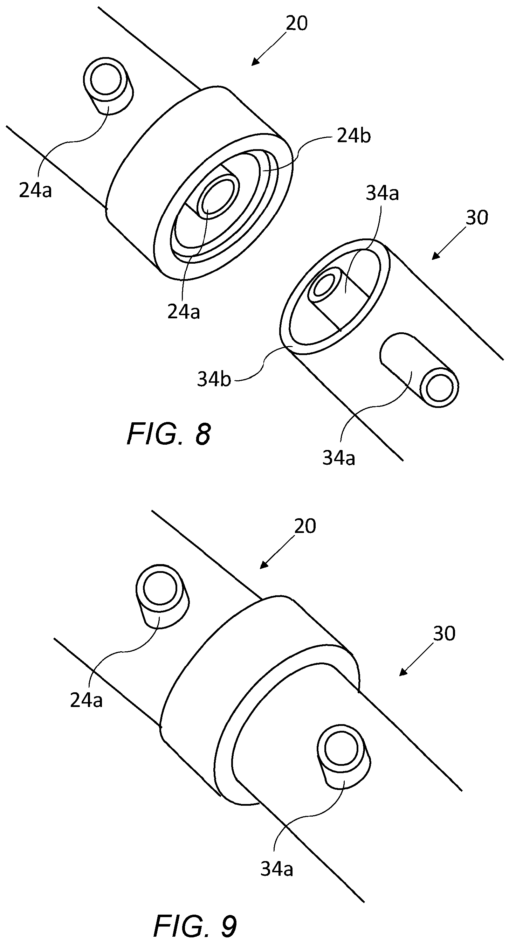

Figure 8 shows an example that seeks to address the abovementioned challenges. In this example, the first conduit 24a and second conduit 24b of the first connector 20 are concentric. Similarly, the first conduit 34a and second conduit 34b are concentric. In particular, the first conduits 24a, 34a are surrounded circumferentially by the respective second conduits 24b, 34b. The connection can thereby be formed at any relative rotation between the first connector 20 and second connector 30, with no possibility of misalignment. This type of connection is achieved with the minimum number of interfaces (i.e. one per fluid path), reducing the number of seals required.

Accessing the flow from the first, inner conduit 24a could be achieved by creating a junction, with the first conduit penetrating through the outer wall of the second, outer conduit 24b wall - such as shown in figures 8 and 9.

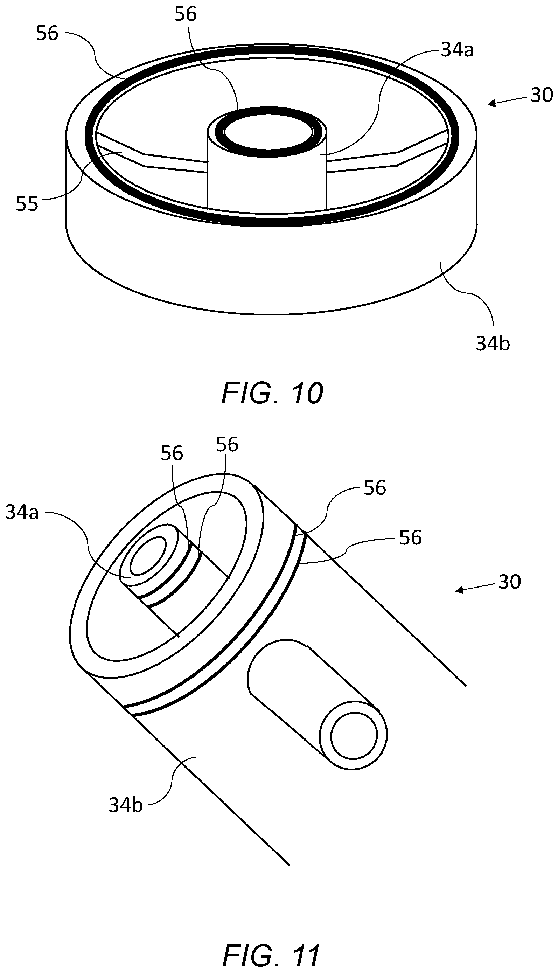

The first, inner conduits 24a, 34a could be supported within the second, outer conduits 24b, 34b by a bracket or extruded feature 55 to hold it centrally within the assembly, such as shown in Figure 10.

It will be appreciated that a number of options for sealing the conduits 24a, 24b, 34a, 34b may be suitable. Sealing the respective conduits 24a, 24b, 34a, 34a may be provided by a circumferential seal 56 at an end of one of the respective connectors 20, 30 (see Figure 10), although the quality of the seal would rely on the clamping force between the first connector 20 and second connector 30. Another option is to provide one or more seal rings 56 extending around the outer walls of the conduits 24a, 24b, 34a, 34b, in the same manner as piston rings (See Figure 11).

Figures 12 and 13 show an outer panel 11 in the form of a refuelling panel 11 defining a port 12 over which the first connector 20 is mounted. The first connector 20 may be attached to the panel 11 by any suitable means, such as the fasteners 58 shown in Figures 12 and 13. In this example, the seals 56 are located on the (male) second connector 30, although the seals 56 may be located at any suitable point across the connection. The advantage of locating the seals 56 on the second connector 30 is that this part is not normally attached to the aircraft 1 and is therefore easier to replace during standard maintenance of the ground equipment, with minimal disruption to the aircraft 1 operation.

An advantage of the example shown in Figures 8 to 13 is the compatibility with a rotation-based quick release mechanism due to the freedom of the first conduits 21, 31 to move rotationally relative to each other, and the freedom of the second conduits 22, 32 to move rotationally relative to each other, whilst connected. In alternative examples (such as those shown in Figures 5-7E), rotation of the conduits relative to one another will be limited to at least some degree.

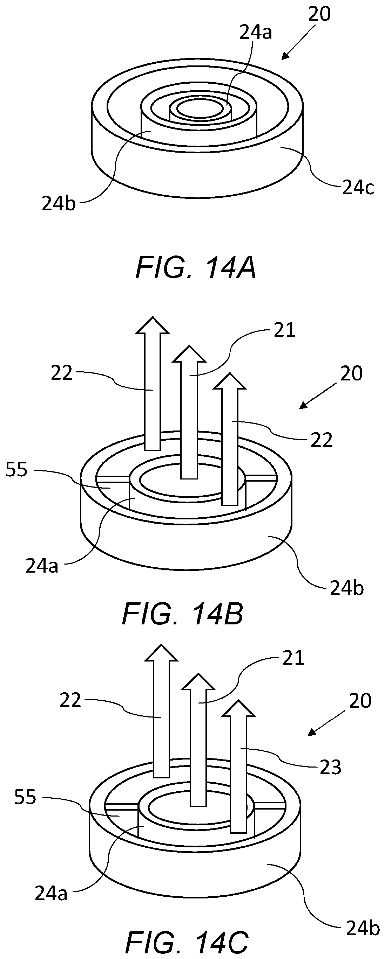

It will be appreciated that in further examples, additional concentric conduits may be provided. Figure 14A shows an example in which a first, second and third conduit 24a, 24b, 24c are concentric with each other, such that the second conduit 24b circumferentially surrounds the first conduit 24a, and the third conduit 24c circumferentially surrounds the first and second conduits 24a, 24b.

In some examples, one of the conduits 24a, 24b, 34a, 34b may be split into multiple sections. This split may be facilitated by the extruded feature 55 referred to in relation to Figure 10 that fix the position of the first conduit 24a relative to the second conduit 24b. An example is shown in Figure 14B, in which each half of the second conduit 24b forms part of the second fluid path 22. A similar example is shown in Figure 14C in which each half of the second conduit 24b forms a separate fluid paths 22, 23.

In the abovementioned examples, the connection has been discussed in relation to the fuelling of an aircraft 1. It will be appreciated that the connection has many other uses in the context of transferring fluids to and/or from the tanks of an aircraft 1.

In some examples, fuels may be transferred from the fuel tanks 10a, 10b into the external fuel tanks 50a, 50b. Such defueling of the aircraft 1 may be necessary for several reasons including maintenance and inspection. It will be appreciated that the connection may be used for simultaneous fuelling and defueling, with a first fuel transferred to a first fuel tank 10a whilst a second fuel 10b is transferred out of the second fuel tank 10b. These operations may be performed simultaneously or sequentially.

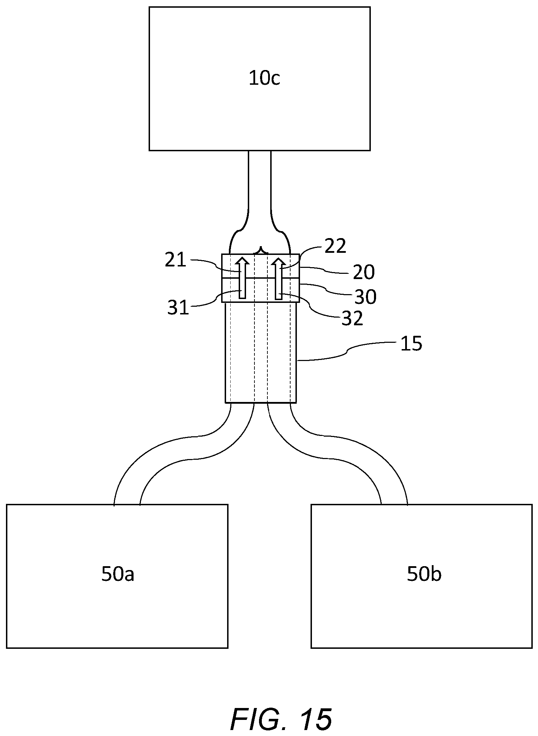

In some examples, the fluid paths 21, 22, 23 may converge at the first connector end or the second connector end. An example is shown in Figure 15, in which the first and second fluid paths 31, 32 of the second connector 30 extend from separate external tanks 50a, 50b, whilst the first and second fuel paths 21, 22 of the first connector 20 converge towards a common fuel tank 10c. Such an arrangement may provide several functions. For instance, sustainable aviation fuel (SAF) may be combined with a jet fuel (e.g. jet A) upon fuelling the aircraft 1.

Alternatively, fuel additives may be added from a first tank 50a and/or second tank 50b, either to a common fuel tank 10c or to respective fuel tanks 10a, 10b.

The arrangement may provide further benefits beyond refuelling and defueling. For instance, due to the presence of oxygen and fuel vapour in a fuel tank 10c, the concentration of oxygen in the ullage is maintained below a specified value to reduce the risk of combustion. To do this, the air in the ullage of the fuel tank 10c may be displaced by oxygen-depleted air (e.g. nitrogen or nitrogen enriched air) supplied from a first external tank 50a. In this case, the connection can also be configured to allow fuel to be supplied from a second external tank 50b.

Similarly, leak testing of fuel tanks 10c typically involves the use of a tracer gas, such as helium or nitrogen. The present connection can allow the tracer gas to be delivered to the fuel tank 10c whilst also being capable of functioning as a refuelling connection.

The fuel tank 10c may build up a quantity of water within a given region of the fuel tank 10c. This may be due to several reasons such as condensation within the tank 10c or separation of residual water in the fuel itself. The fuel often has a lower density than water such that the water collects towards the bottom of the tank 10c. Consequently, fuel tanks 10c are generally drained of water during regular maintenance. In at least some examples, the water within the fuel tank 10c may be extracted using the same connection as the fuel. For example, the water may flow through a first fluid path 21, 31 and the fuel may flow through a second fluid path 22, 32.

Whilst the above examples all relate to transfer to fuel tanks, it will be appreciated that the applicability of the connection is wider than this.

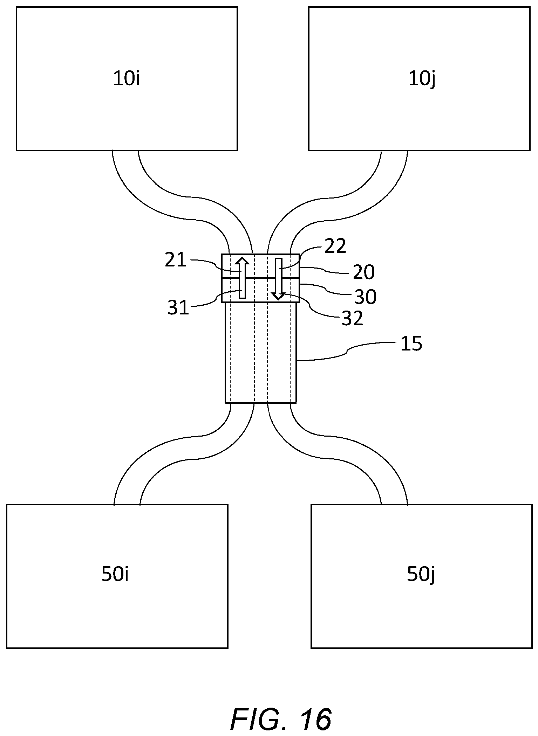

Figure 16 shows an example in which the first fluid path 21 of the first connector 20 extends towards a water tank 10i to transfer water from an external water tank 50i, and the second fluid path 22 of the first connector 20 extends towards an external waste tank 50j so as to transfer waste from an aircraft waste tank 10j. In this manner, the waste tank 10j may be emptied of waste whilst the water tank 10i is refilled. The connection may also provide a means of transferring other fluids such as hydraulic fluid and engine oil.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An aircraft (1) comprising a port (12) over which a first connector (20) is mounted for connecting to a second, complementary connector (30) to transfer fluid to and/or from the aircraft, wherein the port is an opening in a side of the aircraft, the first connector including a first fluid path (21) extending from the port towards an aircraft fluid tank and a second, different, fluid path (22) extending from the port towards an aircraft fluid tank, **characterised in that** the first fluid path is defined by a first conduit (24a) of the first connector configured to connect to a first conduit (34a) of the second connector, and the second fluid path is defined by a second conduit (24b) of the first connector configured to connect to a second conduit (34b) of the second connector.

2. The aircraft (1) of claim 1, wherein the cross-section of the first fluid path (21) is different to the cross-section of the second fluid path (22).

3. The aircraft (1) of any preceding claim, wherein the first fluid path (21) is concentric with the second fluid path (22).

4. The aircraft (1) of any preceding claim, wherein the first conduit extends through an outer wall of the second conduit.

5. The aircraft (1) of any preceding claim, wherein the first connector (20) comprises an alignment pin (61) or an alignment port for mating with a corresponding alignment port or alignment pin of a second connector (30) so as to align the connectors.

6. The aircraft (1) of any preceding claim, wherein the first fluid path (21) extends to a first aircraft fluid tank (10a) and the second fluid path (22) extends to a second aircraft fluid tank (10b).

7. A kit of parts comprising the aircraft (1) of any preceding claim and a second connector (30) configured to releasably connect to the first connector (20) to form a connection, the second connector including a first fluid path (31) that upon connection to the first connector extends from the first fluid path (21) of the first connector towards an external fluid tank, and a second fluid path (32) that upon connection to the first connector extends from the second fluid path (22) of the first connector towards an external fluid tank.

8. The kit of parts of claim 7, wherein the first connector (20) and the second connector (30) are configured such that:
the first fluid path (21) of the first connector (20) is unable to form a fluidically sealed path with the second fluid path (32) of the second connector (30), and
the second fluid path (22) of the first connector is unable to form a fluidically sealed path with the first fluid path (31) of the second connector.

9. A method of transferring fluids to and/or from an aircraft (1), comprising:
providing an aircraft having a port (12) over which is mounted a first connector (20), wherein the port is an opening in a side of the aircraft, the first connector connected to a second connector (30) to form a connection, the first connector including a first fluid path (21) extending from the port towards an aircraft fluid tank and a second, different, fluid path (22) extending from the port towards an aircraft fluid tank;
transferring a first fluid through the first fluid path to transfer the first fluid to or from the aircraft; and
transferring a second fluid through the second fluid path to transfer the second fluid to or from the aircraft, **characterised in that** the first fluid path is defined by a first conduit (24a) connected to a first conduit (34a) of the second connector, and the second fluid path is defined by a second conduit (24b) of the first connector connected to a second conduit (34b) of the second connector.

10. The method of claim 9, comprising:
transferring the first fluid through the first fluid path (21) to or from a first aircraft fuel tank (10a), and
transferring the second fluid through the second fluid path (22) to or from a second aircraft fuel tank (10b).

11. The method of claim 9, comprising:
transferring the first fluid through the first fluid path (21) to or from an aircraft fuel tank (10a), and
transferring the second fluid through the second fluid path (22) to or from the aircraft fuel tank (10a).

12. The method of any one of claims 9 to 11, wherein the first fluid is one of a first aviation fuel, a second aviation fuel, fuel additives, oxygen-depleted air, a tracer gas, hydraulic fluid, engine oil, or water, and wherein the second fluid is a different one of a first aviation fuel, a second aviation fuel, fuel additives, oxygen depleted air, a tracer gas, hydraulic fluid, engine oil, or water.

13. A method of transferring fluids to and/or from the aircraft (1) according to the method of claim 9, comprising:
transferring water through the first fluid path (21) towards an aircraft water tank (10i), and
transferring waste through the second fluid path (22) from an aircraft waste tank (10j).

## Patentansprüche

1. Flugzeug (1) umfassend einen Anschluss (12), über dem ein erster Verbinder (20) zum Verbinden mit einem zweiten, komplementären Verbinder (30) zum Übertragen von Fluid zu dem und/oder von dem Flugzeug angebracht ist, wobei der Anschluss eine Öffnung in einer Seite des Flugzeugs ist, wobei der erste Verbinder einen ersten Fluidpfad (21) aufweist, der sich von dem Anschluss zu einem Flugzeugfluidtank erstreckt, und einen zweiten, unterschiedlichen, Fluidpfad (22), der sich von dem Anschluss zu einem Flugzeugfluidtank erstreckt, **dadurch gekennzeichnet, dass** der erste Fluidpfad durch eine erste Leitung (24a) des ersten Verbinders definiert ist, die dazu ausgelegt ist, mit einer ersten Leitung (34a) des zweiten Verbinders verbunden zu werden, und der zweite Fluidpfad durch eine zweite Leitung (24b) des ersten Verbinders definiert ist, die dazu ausgelegt ist, mit einer zweiten Leitung (34b) des zweiten Verbinders verbunden zu werden.

2. Flugzeug (1) nach Anspruch 1, wobei der Querschnitt des ersten Fluidpfads (21) von dem Querschnitt des zweiten Fluidpfads (22) verschieden ist.

3. Flugzeug (1) nach einem der vorhergehenden Ansprüche, wobei der erste Fluidpfad (21) konzentrisch zu dem zweiten Fluidpfad (22) ist.

4. Flugzeug (1) nach einem der vorhergehenden Ansprüche, wobei sich die erste Leitung durch eine Außenwand der zweiten Leitung erstreckt.

5. Flugzeug (1) nach einem der vorhergehenden Ansprüche, wobei der erste Verbinder (20) einen Ausrichtstift (61) oder eine Ausrichtöffnung zum Zusammenwirken mit einer entsprechenden Ausrichtöffnung oder einem Ausrichtstift eines zweiten Verbinders (30) zum Ausrichten der Verbinder umfasst.

6. Flugzeug (1) nach einem der vorhergehenden Ansprüche, wobei sich der erste Fluidpfad (21) zu einem ersten Flugzeugfluidtank (10a) erstreckt und sich der zweite Fluidpfad (22) zu einem zweiten Flugzeugfluidtank (10b) erstreckt.

7. Kit von Teilen, umfassend das Flugzeug (1) nach einem der vorhergehenden Ansprüche und einen zweiten Verbinder (30), der dazu ausgelegt ist, lösbar mit dem ersten Verbinder (20) verbunden zu werden, um eine Verbindung zu bilden, wobei der zweite Verbinder einen ersten Fluidpfad (31) aufweist, der sich bei Verbindung mit dem ersten Verbinder von dem ersten Fluidpfad (21) des ersten Verbinders zu einem externen Fluidtank erstreckt, und einen zweiten Fluidpfad (32), der sich bei Verbindung mit dem ersten Verbinder von dem zweiten Fluidpfad (22) des ersten Verbinders zu einem externen Fluidtank erstreckt.

8. Kit von Teilen nach Anspruch 7, wobei der erste Verbinder (20) und der zweite Verbinder (30) so ausgelegt sind, dass
der erste Fluidpfad (21) des ersten Verbinders (20) nicht in der Lage ist, einen fluiddicht abgeschlossenen Pfad mit dem zweiten Fluidpfad (32) des zweiten Verbinders (30) zu bilden, und
der zweite Fluidpfad (22) des ersten Verbinders nicht in der Lage ist, einen fluiddicht abgeschlossenen Pfad mit dem ersten Fluidpfad (31) des zweiten Verbinders zu bilden.

9. Verfahren zum Übertragen von Fluiden zu und/oder von einem Flugzeug (1), umfassend:
Bereitstellen eines Flugzeugs mit einem Anschluss (12), über dem ein erster Verbinder (20) angebracht ist, wobei der Anschluss eine Öffnung in einer Seite des Flugzeugs ist, wobei der erste Verbinder mit einem zweiten Verbinder (30) verbunden ist, um eine Verbindung zu bilden, wobei der erste Verbinder einen ersten Fluidpfad (21) aufweist, der sich von dem Anschluss zu einem Flugzeugfluidtank erstreckt, und einen zweiten, unterschiedlichen, Fluidpfad (22), der sich von dem Anschluss zu einem Flugzeugfluidtank erstreckt;
Übertragen eines ersten Fluids durch den ersten Fluidpfad, um das erste Fluid zu oder von dem Flugzeug zu übertragen; und
Übertragen eines zweiten Fluids durch den zweiten Fluidpfad, um das zweite Fluid zu oder von dem Flugzeug zu übertragen, **dadurch gekennzeichnet, dass** der erste Fluidpfad durch eine erste Leitung (24a) definiert ist, die mit einer ersten Leitung (34a) des zweiten Verbinders verbunden ist, und der zweite Fluidpfad durch eine zweite Leitung (24b) des ersten Verbinders definiert ist, die mit einer zweiten Leitung (34b) des zweiten Verbinders verbunden ist.

10. Verfahren nach Anspruch 9, umfassend:
Übertragen des ersten Fluids durch den ersten Fluidpfad (21) zu oder von einem ersten Flugzeugkraftstofftank (10a), und
Übertragen des zweiten Fluids durch den zweiten Fluidpfad (22) zu oder von einem zweiten Flugzeugkraftstofftank (10b).

11. Verfahren nach Anspruch 9, umfassend:
Übertragen des ersten Fluids durch den ersten Fluidpfad (21) zu oder von einem Flugzeugkraftstofftank (10a), und Übertragen des zweiten Fluids durch den zweiten Fluidpfad (22) zu oder von dem Flugzeugkraftstofftank (10a).

12. Verfahren nach einem der Ansprüche 9 bis 11, wobei das erste Fluid eines von einem ersten Flugkraftstoff, einem zweiten Flugkraftstoff, Kraftstoffadditiven, sauerstoffarmer Luft, einem Tracergas, Hydraulikflüssigkeit, Motoröl oder Wasser ist, und wobei das zweite Fluid ein anderes von einem ersten Flugkraftstoff, einem zweiten Flugkraftstoff, Kraftstoffadditiven, sauerstoffarmer Luft, einem Tracergas, Hydraulikflüssigkeit, Motoröl oder Wasser ist.

13. Verfahren zum Übertragen von Fluiden zu und/oder von dem Flugzeug (1) gemäß dem Verfahren nach Anspruch 9, umfassend:
Übertragen von Wasser durch den ersten Fluidpfad (21) in Richtung eines Flugzeugwassertanks (10i), und
Übertragen von Abfall durch den zweiten Fluidpfad (22) aus einem Flugzeugabfalltank (10j).

## Revendications

1. Aéronef (1) comprenant un orifice (12) sur lequel un premier raccord (20) est monté pour être relié à un second raccord (30) complémentaire pour transférer du fluide vers et/ou depuis l'aéronef, l'orifice étant une ouverture dans un côté de l'aéronef, le premier raccord comprenant un premier trajet de fluide (21) s'étendant depuis l'orifice vers un réservoir de fluide d'aéronef et un second trajet de fluide (22) différent s'étendant depuis l'orifice vers un réservoir de fluide d'aéronef, **caractérisé en ce que** le premier trajet de fluide est défini par un premier conduit (24a) du premier raccord conçu pour être relié à un premier conduit (34a) du second raccord, et le second trajet de fluide étant défini par un second conduit (24b) du premier raccord conçu pour être relié à un second conduit (34b) du second raccord.

2. Aéronef (1) selon la revendication 1, la section transversale du premier trajet de fluide (21) étant différente de la section transversale du second trajet de fluide (22).

3. Aéronef (1) selon l'une quelconque des revendications précédentes, le premier trajet de fluide (21) étant concentrique au second trajet de fluide (22).

4. Aéronef (1) selon l'une quelconque des revendications précédentes, le premier conduit s'étendant à travers une paroi extérieure du second conduit.

5. Aéronef (1) selon l'une quelconque des revendications précédentes, le premier raccord (20) comprenant une broche d'alignement (61) ou un orifice d'alignement pour s'accoupler avec un orifice d'alignement ou une broche d'alignement correspondant d'un second raccord (30) de sorte à aligner les raccords.

6. Aéronef (1) selon l'une quelconque des revendications précédentes, le premier trajet de fluide (21) s'étendant jusqu'à un premier réservoir de fluide d'aéronef (10a) et le second trajet de fluide (22) s'étendant jusqu'à un second réservoir de fluide d'aéronef (10b).

7. Kit de pièces comprenant l'aéronef (1) selon l'une quelconque des revendications précédentes et un second raccord (30) conçu pour être relié amovible au premier raccord (20) pour former une liaison, le second raccord comprenant un premier trajet de fluide (31) qui, lors de la liaison au premier raccord, s'étend depuis le premier trajet de fluide (21) du premier raccord vers un réservoir de fluide externe, et un second trajet de fluide (32) qui, lors de la liaison au premier raccord, s'étend du second trajet de fluide (22) du premier raccord vers un réservoir de fluide externe.

8. Kit de pièces selon la revendication 7, le premier raccord (20) et le second raccord (30) étant conçus de sorte que :
le premier trajet de fluide (21) du premier raccord (20) ne peut pas former un trajet étanche aux fluides avec le second trajet de fluide (32) du second raccord (30), et
le second trajet de fluide (22) du premier raccord ne peut pas former un trajet étanche aux fluides avec le premier trajet de fluide (31) du second raccord.

9. Procédé de transfert de fluides vers et/ou depuis un aéronef (1), comprenant :
la fourniture d'un aéronef comportant un orifice (12) sur lequel est monté un premier raccord (20), l'orifice étant une ouverture dans un côté de l'aéronef, le premier raccord étant relié à un second raccord (30) pour former une liaison, le premier raccord comprenant un premier trajet de fluide (21) s'étendant depuis l'orifice vers un réservoir de fluide d'aéronef et un second trajet de fluide (22) différent s'étendant depuis l'orifice vers un réservoir de fluide d'aéronef ;
le transfert d'un premier fluide à travers le premier trajet de fluide pour transférer le premier fluide vers ou depuis l'aéronef ; et
le transfert d'un second fluide à travers le second trajet de fluide pour transférer le second fluide vers ou depuis l'aéronef, **caractérisé en ce que** le premier trajet de fluide est défini par un premier conduit (24a) relié à un premier conduit (34a) du second raccord, et le second trajet de fluide étant défini par un second conduit (24b) du premier raccord relié à un second conduit (34b) du second raccord.

10. Procédé selon la revendication 9, comprenant :
le transfert du premier fluide à travers le premier trajet de fluide (21) vers ou depuis un premier réservoir de carburant d'aéronef (10a), et
le transfert du second fluide à travers le second trajet de fluide (22) vers ou depuis un second réservoir de carburant d'aéronef (10b).

11. Procédé selon la revendication 9, comprenant :
le transfert du premier fluide à travers le premier trajet de fluide (21) vers ou depuis un réservoir de carburant d'aéronef (10a), et
le transfert du second fluide à travers le second trajet de fluide (22) vers ou depuis le réservoir de carburant d'aéronef (10a).

12. Procédé selon l'une quelconque des revendications 9 à 11, le premier fluide étant l'un d'un premier carburant d'aviation, d'un second carburant d'aviation, d'additifs de carburant, d'air appauvri en oxygène, d'un gaz traceur, d'un fluide hydraulique, d'une huile moteur, ou de l'eau, et le second fluide étant différent d'un premier carburant d'aviation, d'un second carburant d'aviation, d'additifs de carburant, d'air appauvri en oxygène, d'un gaz traceur, d'un fluide hydraulique, d'une huile moteur ou de l'eau.

13. Procédé de transfert de fluides vers et/ou depuis l'aéronef (1) conformément au procédé selon la revendication 9, comprenant :
le transfert d'eau à travers le premier trajet de fluide (21) vers un réservoir d'eau d'aéronef (10i), et
le transfert de déchets à travers le second trajet de fluide (22) à partir d'un réservoir de déchets d'aéronef (10j).
